# EUROPÄISCHE PATENTSCHRIFT

(11) **EP 0 563 524 B1**
(45) Veröffentlichungstag und Bekanntmachung des Hinweises auf die Patenterteilung: **13.10.1999**
(21) Anmeldenummer: 93101264.5
(22) Anmeldetag: 28.01.1993
(51) Int. Cl.: H04B 10/16, H01S 3/06, H04B 10/17

(54) **Optisches Nachrichtenübertragungssystem mit faseroptischen Verstärkern und Regelung der Sender-Wellenlänge**
Optical transmission system with optical fibre amplifiers and control of the emitter wavelength
Système de transmission optique à amplificateurs optiques et régulation de la longueur d'onde de l'émetteur

(30) Priorität: 19.03.1992 DE 4208857
(43) Veröffentlichungstag der Anmeldung: 06.10.1993
(73) Patentinhaber: ALCATEL, 75008 Paris (FR)
(72) Erfinder: Heidemann, Rolf, Dr., W-7146 Tamm (DE)
(74) Vertreter: Kugler, Hermann, Dipl.-Phys.

(56) Entgegenhaltungen:
- US-A- 5 088 095
- ELECTRONICS LETTERS. Bd. 27, Nr. 13, 20. Juni 1991, STEVENAGE GB Seiten 1164 - 1166 M.ZIRNGIBL 'All-Optical Remote Gain Switching in Er-Doped Fibre Amplifiers'
- PATENT ABSTRACTS OF JAPAN vol. 13, no. 232 (E-765) 29 Mai 1989 & JP-A-1 039 787 ( NEC CORP )
- PATENT ABSTRACTS OF JAPAN vol. 12, no. 277 (E-640) 30 Juli 1988 & JP-A-63 055 991 ( YOKOGAWA ELECTRIC )

## Beschreibung

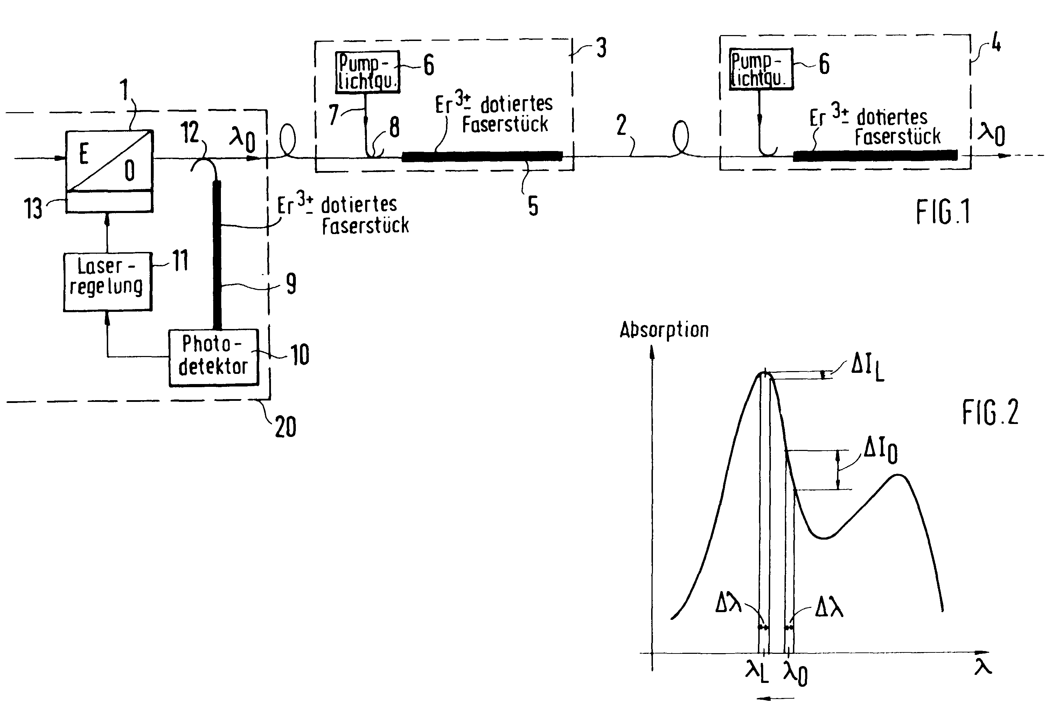

Die Erfindung betrifft ein optisches Nachrichtenübertragungssystem nach dem Oberbegriff des Patentanspruchs 1. Ein derartiges System ist bekannt aus: C.R. Giles: "Propagation of Signal and Noise in Concatenated Erbium-Doped Fiber Optical Amplifiers", Journal of Lightwave Technology, VOL. 9, No. 2, February 1991, S. 147 bis 154, insbesondere aus Fig. 2.

Aus C.R. Giles: "Modeling Erbium-Doped Fiber Amplifiers, Journal of Lightwave Technology, VOL.9, No. 2, February 1991, S. 271 bis 283, insbesondere aus Fig. 2 auf Seite 272, ist bekannt, daß die Verstärkung eines faseroptischen Verstärkers abhängig von der Wellenlänge seines optischen Eingangsignals, also der Emissionswellenlänge des optischen Senders des Übertragungssystems, ist. In zwei Beispielen für verschiedene Zusammensetzungen von Er³⁺-dotierten Lichtwellenleiterstücken, die in faseroptischen Verstärkern vorzugsweise verwendet werden, ist die Wellenlängenabhängigkeit der Verstärkung gezeigt (gestrichelte Kurve). Zusätzlich ist die Wellenlängenabhängigkeit der Absorption in denselben Lichtwellenleiterstücken gezeigt (durchgezogene Kurve).

Man sieht, daß die Verstärkungskurve und die Absorptionskurve ihr Maximum bei derselben Wellenlänge haben und daß diese Wellenlänge für die verschiedenen Typen von Lichtwellenleiterstücken nahezu dieselbe ist.

In optischen Nachrichtenübertragungssystemen mit solchen faseroptischen Verstärkern ergibt sich durch die geschilderte Wellenlängenabhängigkeit der Verstärkung das folgende Problem: Liegt die Emissionswellenlänge des im optischen Sender verwendeten Halbleiterlasers nicht bei der Wellenlänge, bei der der faseroptische Verstärker sein Verstärkungsmaximum hat, sondern nur geringfügig daneben, so ist die Verstärkung bereits beträchtlich verschlechtert. Weiterhin kann, wenn mehrere faseroptische Verstärker hintereinander angeordnet sind, das Rauschen bei der Wellenlänge maximaler Verstärkung sich akkumulieren und dadurch das Signal-Rausch-Verhältnis schlechter werden.

Dazu kommt noch folgendes Problem: Bekanntlich gibt es bei optischen Übertragungssystemen den sogenannten "Laser-Chirp", das heißt eine von der Signalamplitude des optisch zu übertragenden elektrischen Signals abhängige unerwünschte Wellenlängenschwankung des optischen Signals. Liegt nun die Wellenlänge des übertragenen optischen Signals nicht bei der hinsichtlich der Verstärkung in faseroptischen Verstärkern optimalen Wellenlänge, so ist die Steilheit, mit der die Verstärkungskurve von der Wellenlänge abhängt, sehr groß, so daß die im optischen Signal vorhandenen unerwünschten Wellenlängenschwankungen durch die optische Verstärkung in beträchtliche unerwünschte Amplitudenschwankungen umgesetzt werden. Im Bereich des Maximums der Verstärkungskurve sind solche durch Wellenlängenschwankungen verursachte Amplitudenschwankungen deutlich geringer.

Demnach wäre es wünschenswert, daß die Emissionswellenlänge des optischen Senders des Übertragungssystems gleich derjenigen Wellenlänge ist, bei der der Typ eines faseroptischen Verstärkers, von dem einer oder mehrere in die Lichtwellenleiterstrecke eingefügt sind, sein Verstärkungsmaximum hat. Betrachtet man eine Reihe von in einer Übertragungsstrecke hintereinanderliegenden faseroptischen Verstärkern, von denen jeder die geschilderte Wellenlängenabhängigkeit der Verstärkung hat, so ist klar, daß die Gesamtheit der in Kette angeordneten faseroptischen Verstärker nur in einem schmalen Band von Wellenlängen eine gute Verstärkung der übertragenen optischen Signale bewirkt. Zwar gibt es handelsübliche Halbleiterlaser, deren Emissionswellenlänge bei der im Hinblick auf die faseroptischen Verstärker optimalen Wellenlänge (z.B. 1536 nm oder 1555 nm) liegt, jedoch gibt es Abweichungen hiervon aufgrund von Exemplarstreuungen verschiedener Exemplare eines bestimmten Lasertyps und aufgrund von Änderungen der Emissionswellenlänge durch Alterung der Halbleiterlaser und Schwankungen ihrer Umgebungstemperatur.

In den genannten Veröffentlichungen ist nicht erläutert, wie für eine Anpassung zwischen der Emissionswellenlänge des optischen Senders des Systems und der Wellenlänge, bei der die einen oder mehrere faseroptische Verstärker enthaltende Lichtwellenleiter-Strecke eine effektive Verstärkung hat, gesorgt werden kann.

Es ist die Aufgabe der Erfindung, ein System der genannten Art anzugeben, bei dem für eine solche Anpassung gesorgt ist.

Die Aufgabe wird wie im Patentanspruch 1 angegeben gelöst. Weiterbildungen ergeben sich aus den Unteransprüchen.

Die erfindungsgemäße Ausgestaltung des optischen Senders eines optischen Nachrichtenübertragungssystems mit mindestens einem faseroptischen Verstärker ist Gegenstand des Patentanspruchs 6. Weiterbildungen sind den Unteransprüchen zu entnehmen.

Die Erfindung soll bewirken, daß die Emissionswellenlänge des optischen Senders auf diejenige Wellenlänge eingeregelt wird, bei der die faseroptischen Verstärker ihr Eingangslicht maximal verstärken. Dabei macht sie sich die Tatsache zunutze, daß das Verstärkungs-Spektrum, also der wellenlängenabhängige Verlauf der Verstärkung, eines faseroptischen Verstärkers sein Maximum bei derselben Wellenlänge hat wie das Absorptionsspektrum des Lichtwellenleiterstücks, das im faseroptischen Verstärker als verstärkendes Lichtwellenleiterstück verwendet ist.

Die Erfindung wird nun anhand eines in den Zeichnungen dargestellten Ausführungsbeispieles näher erläutert. Es zeigen:
- Fig. 1: ein Blockschaltbild des erfindungsgemäßen Übertragungssystems und
- Fig. 2: schematisch den wellenlängenabhängigen Verlauf der Absorption in einem Er³⁺-dotierten Lichtwellenleiterstück zu Erläuterung der Regelung der Wellenlänge auf das Maximum der Absorption.

Das erfindungsgemäße Übertragungssystem enthält wie bekannte Übertragungssysteme als typische Bestandteile einen Halbleiterlaser 1, auch Elektrisch-Optisch-Wandler genannt, der sein elektrisches Eingangssignal in ein optisches Ausgangssignal mit einer bestimmten Emissionswellenlänge λ_{O} umsetzt, eine Lichtwellenleiter-Übertragungsstrecke 2, die den Halbleiterlaser 1 mit einem weit entfernten nicht gezeigten optischen Empfänger verbindet, und in die Lichtwellenleiter-Strecke eingefügte faseroptische Verstärker 3 und 4.

Die Anzahl der in die Lichtwellenleiter-Strecke 2 eingefügten faseroptischen Verstärker spielt für die vorliegende Erfindung keine Rolle. Sie hängt von dem Anwendungsfall ab, für den die optische Übertragungsstrecke eingesetzt werden soll. Zu solchen Anwendungsfällen gehören auch solche, bei denen die übertragenen optischen Signale am Ausgang der faseroptischen Verstärker auf eine Vielzahl von weiterführenden Lichtwellenleitern verzweigt werden, die wiederum faseroptische Verstärker enthalten können. Wesentlich für die vorliegende Erfindung ist, daß die Übertragungsstrecke mindestens einen faseroptischen Verstärker enthält.

Für den Fall, daß mehrere faseroptische Verstärker vorhanden sind, wird im folgenden nur der mit dem Bezugszeichen 3 versehene betrachtet. Er enthält, wie es für solche Verstärker typisch ist, ein Lichtsignale verstärkendes Lichtwellenleiterstück 5, zum Beispiel ein Er³⁺-dotiertes Lichtwellenleiterstück und eine Pumplichtquelle 6, die über ein Lichtwellenleiterstück 7 und einen faseroptischen Koppler 8 ihr Pumplicht in das lichtverstärkende Lichtwellenleiterstück 5 einkoppelt.

Im folgenden wird für jegliche optische Strahlung, also auch für die außerhalb des sichtbaren Bereichs, zur Vereinfachung der Ausdruck Licht verwendet. Typischerweise wird bei solchen Systemen intensitätsmoduliertes Licht mit einer Wellenlänge im Bereich von 1550 nm übertragen.

Soweit bisher beschrieben, handelt es sich um ein bekanntes System mit den eingangs geschilderten Problemen.

Zu deren Lösung ist erfindungsgemäß folgendes vorgesehen: Ein Er³⁺-dotiertes Lichtwellenleiterstück 9, in das ein Teil des vom Laser 1 emittierten Lichts eingekoppelt wird, ein Photodetektor 10, der den nicht absorbierten Anteil des in das Lichtwellenleiterstück 9 eingekoppelten Lichts empfängt und in ein der Intensität des empfangenen Lichts entsprechendes elektrisches Signal umsetzt, und eine Laser-Regelschaltung 11, die aufgrund des elektrischen Ausgangssignals des Photodetektors 10 den Halbleiterlaser 1 so regelt, daß die Lichtabsorption im Lichtwellenleiterstück 9 maximal ist. Diese Mittel bilden zusammen eine Regelvorrichtung.

Der Halbleiterlaser 1, die für seinen Betrieb erforderliche Ansteuerschaltung (Lasertreiberschaltung) und die vorstehend genannten erfindungsgemäß vorhandenen Mittel zur Regelung seiner Emissionswellenlänge, werden zusammen als der optische Sender des Übertragungssystems bezeichnet, was durch die gestrichelte Umrandung und ein Bezugzeichen 20 in Fig. 1 angedeutet ist.

Einzelheiten der Regelvorrichtung werden im folgenden erläutert: Als Mittel, um einen Teil des vom Laser 1 emittierten Lichts in das Lichtwellenleiterstück 9 einzukoppeln, ist im Beispiel von Fig. 1 ein faseroptischer Koppler 12 vorhanden, der in den vom optischen Ausgang des Lasers in Richtung zum optischen Empfänger des Übertragungssystems führenden Lichtwellenleiter 2 eingefügt ist. Stattdessen kann jedes andere Mittel verwendet werden, das dazu geeignet ist, einen Teil des vom Laser 1 emittierten Lichts in das Lichtwellenleiterstück 9 einzukoppeln. Beispielsweise kann auch das am rückwärtigen Ende des Halbleiterlasers austretende Licht in ein Lichtwellenleiterstück und von diesem in das Lichtwellenleiterstück 9 eingekoppelt werden.

Das Lichtwellenleiterstück 9 hat die wesentliche Eigenschaft, daß es das Maximum seiner Lichtabsorption bei derselben Wellenlänge hat, bei der das Lichtwellenleiterstück 5 des faseroptischen Verstärkers sein Maximum der Verstärkung, d.h., der spontanen Emission, hat. Wie bekannt ist, ist dies selbstverständlich der Fall, wenn es sich um ein Lichtwellenleiterstück derselben Art wie das Lichtwellenleiterstück 5 handelt. Bekanntlich kann es aber auch dann der Fall sein, wenn es sich vom Lichtwellenleiterstück 5 durch eine andere Kerndotierung, abgesehen vom Dotiermittel Er³⁺, unterscheidet. Beispielsweise ist es möglich, als verstärkendes Lichtwellenleiterstück 5 ein Lichtwellenleiterstück zu verwenden, dessen Kern nicht nur mit Germanium, sondern auch mit Aluminium dotiert ist, wenn diese Zusammensetzung für die Verwendung als verstärkendes Lichtwellenleiterstück in einem faseroptischen Verstärker Vorteile hat. Trotzdem ist es günstig, als Lichtwellenleiterstück 9 eines zu verwenden, dessen Kern nicht mit Aluminium dotiert ist. Auch ein solches hat nämlich sein Absorptionsmaximum bei derselben Wellenlänge (1536 nm), jedoch deutlich ausgeprägter, so daß es als Referenz-Lichtwellenleiterstück zum Einregeln der Emissionswellenlänge des Lasers auf die Wellenlänge der maximalen Absorption geeigneter ist.

Wesentlich für die Auswahl des Lichtwellenleiterstücks 9 ist also lediglich, daß es aufgrund seiner wellenlängenabhängigen Absorption als guter Referenz-Lichtwellenleiter im Verhältnis zum verstärkenden Lichtwellenleiter 5 des faseroptischen Verstärkers 3 geeignet ist. Das Prinzip der Erfindung ist nämlich, daß die Regelung der Emissionswellenlänge bezogen ist auf die Wellenlängenabhängigkeit der Lichtabsorption in einem Referenz-Lichtwellenleiterstück, deren Maximum bei derselben Wellenlänge liegt, bei der das verstärkende Faserstück 5 sein Verstärkungsmaximum hat. In anderen Worten: die Emissionswellenlänge des Lasers 1 wird dadurch auf die Wellenlänge der maximalen Verstärkung des Verstärkungs-Lichtwellenleiterstücks 5 geregelt, daß sie auf die Wellenlänge des Absorptionsmaximums eines Referenz-Lichtwellenleiters 9 geregelt wird.

Das Referenz-Lichtwellenleiterstück 9 kann, wie in Fig. 1 gezeigt, direkt zwischen dem Ausgang des faseroptischen Kopplers 12 und dem optischen Eingang des Photodetektors 10 angeordnet sein. Es kann aber auch in einen dazwischen verlaufenden Lichtwellenleiter eingespleißt sein.

Ebenso wie die Lichtwellenleiterstücke in den faseroptischen Verstärkern ist es in der Zeichnung dicker dargestellt als die normalen Lichtwellenleiter, um es von diesen abzuheben.

Selbstverständlich sind sie in Wirklichkeit nicht dicker, sondern nur in ihrem Kern anders dotiert.

Als bevorzugte Ausführungsbeispiele für die Lichtwellenleiterstücke sind solche betrachtet, die mit Er³⁺ als laseraktiver Substanz dotiert sind. Stattdessen können auch Lichtwellenleiterstücke verwendet werden, die mit einer anderen laseraktiven Substanz dotiert sind, vorausgesetzt, daß diese Substanz in ihrem Wirts-Material ein 3-Energieniveaus-System bildet.

Die Laser-Regelschaltung 11 empfängt vom Photodetektor 10 ein elektrisches Signal, das dem nicht absorbierten Anteil des vom Laser emittierten Lichts entspricht. Durch Anwendung von an sich bekannter Regelungstechnik regelt die Laser-Regelschaltung 11 den Laser so, daß die Lichtabsorption im Referenz-Lichtwellenleiter 9 maximal wird.

Zur Regelung der Emissionswellenlänge des Halbleiterlasers 1 wird von der Tatsache Gebrauch gemacht, daß die Emissionswellenlänge von der Temperatur des Lasers abhängig ist. Die Temperatur wiederum ist wie bei Halbleiterlasern üblich thermoelektrisch steuerbar, indem bei dem Laser 1 eine thermoelektrische Kühleinrichtung 13, ein sogenannter Peltier-Kühler 13, vorhanden ist. Ein elektrischer Kühler-Strom bestimmt dabei die aktuelle Temperatur des Halbleiterlasers 1. Dieser Kühler-Strom wird nun erfindungsgemäß durch die Laserregelungsschaltung 11 so gesteuert, daß die Emissionswellenlänge in der beschriebenen Weise auf die gewünschte Wellenlänge eingeregelt wird.

Steuerbare thermoelektrische Kühler für Halbleiterlaser oder Halbleiter-Bauelemente sind an sich bekannt, zum Beispiel aus der US-A-4,307,469 oder der DE-C 32 14 614, und bedürfen daher keiner näheren Erläuterung.

Statt über den Kühler-Strom des Laser-Kühlers kann man die Emissionswellenlänge des Lasers auch durch Regeln des mittleren Betriebsstroms des Lasers regeln. Auch eine Kombination einer Regelung über die Temperatur und einer Regelung über den mittleren Betriebsstrom ist möglich.

Wie die Laser-Regelschaltung vorzugsweise arbeitet, wird nun anhand von Fig. 2 erläutert. Schematisch zeigt sie die starke Wellenlängenabhängigkeit der Absorption, wie sie für ein Er³⁺-dotiertes Lichtwellenleiterstück im Wellenlängenbereich von 1500 nm typisch ist. Aus den eingangs geschilderten Gründen sollte die Emissionswellenlänge idealerweise dort liegen, wo die Absorptionskurve ihr Maximum hat, also bei λ_{L}. In Fig. 2 ist der Fall betrachtet, daß sie davon abweicht und bei λ_{O} liegt, wo die Absorption sehr stark wellenlängenabhängig ist, so daß ein Regelbedarf besteht.

Die Laser-Regelschaltung 11 enthält einen Modulator, der mittels ihres Ausgangs-Steuersignals, das über die Temperatur des Lasers 1 dessen Emissionswellenlänge steuert, die Emissionswellenlänge mit einer Schwankung von Δλ sehr langsam moduliert, zum Beispiel mit einer Modulationsfrequenz von nur 1 Hz. Eine solche Modulation der Emissionswellenlänge um λ_{O} bewirkt, daß das elektrische Ausgangssignal des Photodetektors eine Signalkomponente mit dieser Modulationsfrequenz enthält. Ihre Stärke entspricht der sich aus der Modulation der Wellenlänge mit der Schwankung Δλ ergebenden Schwankung ΔI_{O} der Intensität des im Photodetektor 10 empfangenen Lichts. Sie ist also umso stärker, je mehr sich die aktuelle Wellenlänge λ_{O}, um die herum die Modulation stattfindet, in einem Bereich starker Steilheit der Absorptionskurve befindet. Aus der genannten Signalkomponente kann also ein Steuersignal zum Verschieben von λ_{O} abgeleitet werden. Dies geschieht durch phasenempfindliche Gleichrichtung der Signalkomponente bezüglich der Phase der Modulation. Daraus ergibt sich auch, welches Vorzeichen das von der Laser-Regelungsschaltung 11 abzugebende Steuersignal haben muß, das heißt, in welche Richtung λ_{O} verschoben werden muß.

Liegt die aktuelle Wellenlänge λ_{O} in einem Bereich wie es im Beispiel der Fig. 2 gezeigt ist so nimmt die Absorption ab, das heißt, die Intensität des empfangenen Lichtes zu, wenn bei der Modulation die Wellenlänge gerade erhöht wird. Wird also diese Phasenbeziehung festgestellt, so muß λ_{O} verkleinert werden, damit es sich an die optimale Wellenlänge λ_{L} annähert. Läge λ_{O} unterhalb von λ_{L}, so wären diese Phasenbeziehungen umgekehrt, so daß dann λ_{O} erhöht werden müßte.

Eine solche Regelung von λ_{O} in Richtung von λ_{L} aufgrund der Komponente im Ausgangssignal des Photodetektors mit der Modulationsfrequenz wird solange durchgeführt, bis diese Komponente verschwunden ist. Das ist dann der Fall, wenn λ_{O} so nahe bei λ_{L} liegt, daß die Emissionswellenlänge durch die Modulation die optimale Wellenlänge λ_{O} über- und unterschreitet. Statt der Signalkomponente mit der Modulationsfrequenz erscheint dann im Ausgangssignal des Photodetektors eine Signalkomponente mit der doppelten Modulationsfrequenz, weil dann innerhalb einer Modulationsperiode der Wellenlänge die Absorption ihr Maximum zweimal durchläuft. Wie im Beispiel der Fig. 2 gezeigt, ist dann die Schwankung ΔI_{L} auf das Minimum reduziert.

Da wie eingangs erläutert, die Verstärkungskurve des faseroptischen Verstärkers 3 ihr Maximum bei derselben Wellenlänge λ_{L} hat und ähnlich verläuft wie die Absorptionskurve, ist durch die Einregelung der Emissionswellenlänge auf λ_{L} zweierlei erreicht: eine optimale Verstärkung der zu übertragenden Lichtsignale bei minimaler Abhängigkeit der Verstärkung von Wellenlängenschwankungen.

## Patentansprüche

1. Optisches Nachrichtenübertragungssystem mit einem einen Halbleiterlaser (1) enthaltenden Sender (20) zum Erzeugen eines Lichtsignals und mit einer Lichtwellenleiter-Strecke (2) zum Übertragen des erzeugten Lichtsignals zu einem optischen Empfänger, bei dem in die Lichtwellenleiter-Strecke mindestens ein faseroptischer Verstärker (3, 4), der ein verstärkendes Lichtwellenleiter-Stück (5) enthält, eingefügt ist,
**dadurch gekennzeichnet,**
daß im optischen Sender (20) eine Regelvorrichtung (12, 9, 10, 11, 13) vorhanden ist, die die Emissionswellenlänge des Halbleiterlasers (1) in Abhängigkeit von der Absorption des Lichtsignals in einem Referenz-Lichtwellenleiterstück (9) regelt, das bei derjenigen Wellenlänge (λ_{L}) ein Maximum im Absorptionsspektrum hat, bei der das verstärkende Lichtwellenleiterstück (5) jedes der faseroptischen Verstärker (3, 4) ein Maximum im Emissionsspektrum hat.

2. System nach Anspruch 1, dadurch gekennzeichnet,
- daß Mittel (12) vorhanden sind, um einen Teil des vom Halbleiterlaser (1) erzeugten Lichtsignals in das Referenz-Lichtwellenleiterstück (9) einzukoppeln,
- daß die Regelvorrichtung einen Photodetektor (10) enthält, der das aus dem Referenz-Lichtwellenleiterstück (9) austretende Lichtsignal in ein dessen Intensität entsprechendes elektrisches Signal umsetzt,
- und daß die Regelvorrichtung eine Regelschaltung (11) enthält, die aufgrund dieses elektrischen Signals die Emissionswellenlänge des Halbleiterlasers (1) so regelt, daß das in das Referenz-Lichtwellenleiterstück (9) eingekoppelte Lichtsignal in diesem maximal absorbiert wird.

3. System nach Anspruch 2, dadurch gekennzeichnet, daß der optische Sender (20) Mittel (13) enthält, durch die die Temperatur seines Lasers (1) steuerbar ist und daß die Regelvorrichtung die Emissionswellenlänge des Laser über die Temperatur des Lasers (1) regelt.

4. System nach Anspruch 3, dadurch gekennzeichnet, daß die Regelvorrichtung die Emissionswellenlänge über den mittleren Betriebsstrom des Lasers regelt.

5. System nach Anspruch 3 oder 4, dadurch gekennzeichnet, daß die Regelschaltung (11) die Emissionswellenlänge des Lasers (1) mit einer sehr niedrigen Frequenz moduliert und aus der mit dieser Frequenz stattfindenden Variation des Ausgangssignals des Photodetektors (10) ein solches Regelsignal ableitet, das die Emissionswellenlänge so verschiebt, daß die Absorption der Lichtsignale im Referenz-Lichtwellenleiterstück (9) maximal wird.

6. Optischer Sender (20), enthaltend einen Halblaserleiter (1) zum Erzeugen eines Lichtsignals, für ein optisches Nachrichtenübertragungssystem mit einer Lichtwellenleiter-Strecke (2) zum Übertragen des erzeugten Lichtsignals zu einem optischen Empfänger, in die mindestens ein faseroptischer Verstärker (3, 4), der ein verstärkendes Lichtwellenleiter-Stück (5) mit mindestens einem wohlbestimmten Maximum im Emissionsspektrum des Senders enthält, eingefügt
**dadurch gekennzeichnet,**
daß eine Regelvorrichtung (12, 9, 10, 11, 13) enthält, die die Emissionswellenlänge des Halbleiterlasers (1) in Abhängigkeit von der Absorption des Lichtsignals in einem Referenz-Lichtwellenleiterstück (9) regelt, das bei derjenigen Wellenlänge (λ_{L}) ein Maximum im Absorptionsspektrum hat, bei der das verstärkende Lichtwellenleiterstück (5) jedes des faseroptischen Verstärker (3, 4) ein Maximum im Emissionsspektrum hat.

7. Optischer Sender nach Anspruch 6, dadurch gekennzeichnet,
- daß Mittel (12) vorhanden sind, um einen Teil des vom Halbleiterlaser (1) erzeugten Lichtsignals in das Referenz-Lichtwellenleiterstück (9) einzukoppeln,
- daß die Regelvorrichtung einen Photodetektor (10) enthält, der das aus dem Referenz-Lichtwellenleiterstück (9) austretende Lichtsignal in ein dessen Intensität entsprechendes elektrisches Signal umsetzt,
- und daß die Regelvorrichtung eine Regelschaltung (11) enthält die aufgrund dieses elektrischen Signals die Emissionswellenlänge des Halbleiterlasers (1) so regelt, daß das in das Referenz-Lichtwellenleiterstück (9) eingekoppelte Lichtsignal in diesem maximal absorbiert wird.

8. Optischer Sender nach Anspruch 7, dadurch gekennzeichnet, daß er Mittel (13) enthält, durch die die Temperatur seines Lasers (1) steuerbar ist und daß die Regelvorrichtung die Emissionswellenlänge des Laser über die Temperatur des Lasers (1) regelt.

9. Optischer Sender nach Anspruch 7 dadurch gekennzeichnet, daß die Regelvorrichtung die Emissionswellenlänge über den mittleren Betriebsstrom des Lasers regelt.

10. Optischer Sender nach Anspruch 8 oder 9, dadurch gekennzeichnet, daß die Regelvorrichtung die Emissionswellenlänge des Lasers (1) mit einer sehr niedrigen Frequenz moduliert und aus der mit dieser Frequenz stattfindenden Variation des Ausgangssignals des Photodetektors (10) ein solches Regelsignal ableitet, das die Emissionswellenlänge so verschiebt, daß die Absorption des Lichtsignals im Referenz-Lichtwellenleiterstück (9) maximal wird.

## Claims

1. Optical communication system comprising a transmitter (20) containing a semiconductor laser (1) for generating an optical signal and comprising an optical waveguide link (2) for transmitting the optical signal generated to an optical receiver, in which system at least one fibre-optic amplifier (3, 4) containing an amplifying section (5) of optical waveguide which is inserted into the optical waveguide link, characterized in that there is present in the optical transmitter (20) a control device (12, 9, 10, 11, 13) which controls the emission wavelength of the semiconductor laser (1) as a function of the absorption of the optical signal in a reference section (9) of optical waveguide which has a maximum in the absorption spectrum at that wavelength (λ_{L}) at which the amplifying section (5) of optical waveguide of each of the fibre-optic amplifiers (3, 4) has a maximum in the emission spectrum.

2. System according to Claim 1, characterized
- in that means (12) are present for coupling a portion of the optical signal generated by the semiconductor laser (1) into the reference section (9) of optical waveguide,
- in that the control device contains a photodetector (10) which converts the optical signal emerging from the reference section (9) of optical waveguide into an electrical signal corresponding to its intensity,
- and in that the control device contains a control circuit (11) which controls the emission wavelength of the semiconductor laser (1) on the basis of said electrical signal so that the optical signal coupled into the reference section (9) of optical waveguide is maximally absorbed in the latter.

3. System according to Claim 2, characterized in that the optical transmitter (20) contains means (13) which can control the temperature of its laser (1), and in that the control device controls the emission wavelength of the laser via the temperature of the laser (1).

4. System according to Claim 3, characterized in that the control device controls the emission wavelength via the mean operating current of the laser.

5. System according to Claim 3 or 4, characterized in that the control circuit (11) modulates the emission wavelength of the laser (1) with a very low frequency and derives, from the variation of the output signal of the photodetector (1) taking place with said frequency, a control signal which shifts the emission wavelength so that the absorption of the optical signals in the reference section (9) of optical waveguide becomes maximal.

6. Optical transmitter (20), containing a semiconductor laser (1) for generating an optical signal for an optical communication system having an optical waveguide link (2) for transmitting the generated optical signal to an optical receiver into which at least one fibre-optic amplifier (3, 4) is inserted which contains an amplifying section (5) of optical waveguide having at least one well-defined maximum in the emission spectrum of the transmitter, characterized in that it contains a control device (12, 9, 10, 11, 13) which controls the emission wavelength of the semiconductor laser (1) as a function of the absorption of the optical signal in a reference section (9) of optical waveguide which has a maximum in the absorption spectrum at that wavelength (λ_{L}) at which the amplifying section (5) of optical waveguide of each of the fibre-optic amplifiers (3, 4) has a maximum in the emission spectrum.

7. optical transmitter according to Claim 6,
characterized
- in that means (12) are present for coupling a portion of the optical signal generated by the semiconductor laser (1) into the reference section (9) of optical waveguide,
- in that the control device contains a photodetector (10) which converts the optical signal emerging from the reference section (9) of optical waveguide into an electrical signal corresponding to its intensity,
- and in that the control device contains a control circuit (11) which controls the emission wavelength of the semiconductor laser (1) on the basis of said electrical signal so that the optical signal coupled into the reference section (9) of optical waveguide is maximally absorbed in the latter.

8. Optical transmitter according to Claim 7,
characterized in that it contains means (13) which can control the temperature of its laser (1), and in that the control device controls the emission wavelength of the laser via the temperature of the laser (1).

9. Optical transmitter according to Claim 7,
characterized in that the control device controls the emission wavelength via the mean operating current of the laser.

10. Optical transmitter according to Claim 8 or 9,
characterized in that the control device modulates the emission wavelength of the laser (1) with a very low frequency and derives, from the variation in the output signal of the photodetector (10) taking place at said frequency, a contrdl signal which shifts the emission wavelength so that the absorption of the optical signal in the reference section (9) of optical waveguide becomes maximal.

## Revendications

1. Système de transmission d'informations optique comprenant un émetteur (20) ccntenant un laser à semi-conducteur (1) et destiné à générer un signal lumineux, et une ligne de câble à fibres optiques (2) destinée à transmettre le signal lumineux généré vers un récepteur optique, dans lequel système on insère dans la ligne de câble à fibres optiques au moins un amplificateur à fibres optiques (3, 4), qui contient un tronçon de câble à fibres optiques amplificateur (5), caractérisé en ce que l'émetteur optique (20) comporte un dispositif de réglage (12, 9, 10, 11, 13), qui régule la longueur d'onde d'émission du laser à semi-conducteur (1) en fonction de l'absorption du signal lumineux dans un tronçon de câble à fibres optiques de référence (9), qui atteint un maximum dans le spectre d'absorption, dans la longueur d'onde (λₗ) dans laquelle le tronçon de câble à fibres optiques amplificateur (5) de chaque amplificateur à fibres optiques (3, 4) atteint un maximum dans le spectre d'émission.

2. Système selon la revendication 1, caractérisé
- en ce qu'il est prévu des moyens (12) destinés à introduire une partie du signal lumineux généré par le laser à semi-conducteur (1) dans le tronçon de câble à fibres optiques de référence (9),
- en ce que le dispositif de réglage contient un photodétecteur (10), qui transforme le signal lumineux qui sort du tronçon de câble à fibres optiques de référence (9) en un signal électrique correspondant à l'intensité de celui-ci,
- et en ce que le dispositif de réglage contient un élément de réglage (11), qui en raison de ce signal électrique régule la longueur d'onde d'émission du laser à semi-conducteur (1), de telle sorte que le signal lumineux introduit dans le tronçon de câble à fibres optiques de référence (9) est absorbé au maximum dans celui-ci.

3. Système selon la revendication 2, caractérisé en ce que l'émetteur optique (20) contient des moyens (13) permettant de commander la température de son laser (1) et en ce que le dispositif de réglage régule la longueur d'cnde d'émission du laser par l'intermédiaire de la température du laser (1).

4. Système selon la revendication 3, caractérisé en ce que le dispositif de réglage régule la longueur d'onde d'émission par l'intermédiaire du courant de service moyen du laser.

5. Système selon la revendication 3 ou 4, caractérisé en ce que l'élément de réglage (11) mcdule la longueur d'onde d'émission du laser (1) avec une très faible fréquence et, à partir de la variation du signal de sortie du photodétecteur (10), qui est généré dans cette fréquence, dérive un signal de réglage, de telle sorte que l'absorption des signaux lumineux dans le tronçon de câble à fibres optiques de référence (9) atteint le maximum.

6. Émetteur optique (20), comprenant un laser à semi-conducteur (1) destiné à générer un signal lumineux, pour un système de transmission d'informations optique comprenant une ligne de câble à fibres optiques (2) destinée à transmettre le signal lumineux généré vers un récepteur optique, dans laquelle ligne de câble a été inséré au moins un amplificateur à fibres optiques (3, 4), qui contient un tronçon de câble à fibres optiques amplificateur (5) avec au moins un maximum bien défini dans le spectre d'émission de l'émetteur, caractérisé en ce que ledit émetteur optique contient un dispositif de réglage (12, 9, 10, 11, 13), qui régule la longueur d'onde d'émission du laser à semi-conducteur (1) en fonction de l'absorption du signal lumineux dans un tronçcn de câble à fibres optiques de référence (9), qui atteint un maximum dans le spectre d'absorption dans la longueur d'onde (λ_{L}) dans laquelle le tronçon de câble à fibres optiques amplificateur (5) de chaque amplificateur à fibres optiques (3, 4) atteint le maximum dans le spectre d'émission.

7. Émetteur optique selon la revendication 6, caractérisé
- en ce qu'il est prévu des moyens (12) destinés à introduire une partie du signal lumineux généré par le laser à semi-conducteur (1) dans le tronçon de câble à fibres optiques de référence (9),
- en ce que le dispositif de réglage contient un photodétecteur (10), qui transforme le signal lumineux qui sort du tronçon de câble à fibres optiques de référence (9) en un signal électrique correspondant à l'intensité de celui-ci,
- et en ce que le dispositif de réglage contient un élément de réglage (11), qui en raison de ce signal électrique régule la longueur d'onde d'émission du laser à semi-conducteur (1), de telle sorte que le signal lumineux introduit dans le tronçon de câble à fibres optiques de référence (9) est absorbé au maximum dans celui-ci.

8. Émetteur optique selon la revendication 7, caractérisé en ce qu'il contient des moyens (13) permettant de commander la température de son laser (1) et en ce que le dispositif de réglage régule la longueur d'onde d'émission du laser par l'intermédiaire de la température du laser (1).

9. Émetteur optique selon la revendication 7, caractérisé en ce que le dispositif de réglage régule la longueur d'onde d'émission par l'intermédiaire du courant de service moyen du laser.

10. Émetteur optique selon la revendication 8 ou 9, caractérisé en ce que le dispositif de réglage module la longueur d'onde d'émission du laser (1) avec une très faible fréquence et, à partir de la variation du signal de scrtie du photodétecteur (10), qui est généré dans cette fréquence, dérive un signal de réglage, de telle sorte que l'absorption des signaux lumineux dans le tronçon de câble à fibres optiques de référence (9) atteint le maximum.
